# DEMANDE DE BREVET EUROPEEN

(11) **EP 0 970 780 A1**
(43) Date de publication de la demande: **12.01.2000**
(21) Numéro de dépôt: 99401553.5
(22) Date de dépôt: 23.06.1999
(51) Int. Cl.: B25B 5/08, B23Q 3/18, B62D 65/00

(54) **Dispositif de positionnement et de centrage**

(30) Priorité: 10.07.1998 FR 9808868
(71) Demandeur: Genus Technologies, 92320 Châtillon (FR)
(72) Inventeur: Morel, Michel, 95120 Ermont (FR); Roudier, Fabrice, 78820 Juziers (FR)
(74) Mandataire: Kaspar, Jean-Georges

(57) **Abrégé**

Un dispositif de positionnement et de centrage, notamment de pièce pour carrosserie automobile comporte un corps 1 avec un moyen d'actionnement 2 pour actionner des moyens de centrage 3 aptes à se déplacer entre une position rapprochée de dégagement et une position écartée de centrage. les moyens de centrage 3 sont déplacés par des éléments 7, 8 montés à coulissement et en faisant un angle avec la direction de déplacement du moyen d'actionnement 2.

## Description

L'invention est relative à un dispositif de positionnement et de centrage, notamment de pièce pour carrosserie automobile, du type comportant un corps portant un moyen d'actionnement pour actionner des moyens de centrage aptes à se déplacer entre une position rapprochée de dégagement de la pièce et une position écartée de centrage de la pièce.

On connaît des dispositifs de ce type, généralement dénommés "porte-pilote" par les spécialistes : ces dispositifs connus comportent généralement un vérin de préférence pneumatique, un module de détection de position haute et de position basse, un moyen de maintien en position centrée de la pièce et un boîtier de translation comportant au moins deux pièces aptes à se déplacer entre une position rapprochée de dégagement et une position écartée de centrage.

Le déplacement desdites pièces s'effectue généralement selon une course comprise entre 2 et 100 mm, la précision de centrage recherchée est de préférence meilleure que 5/100^{e} de mm, tandis que l'effort de maintien en position centrée est généralement inférieur à 100 daN.

Du fait que le déplacement desdites pièces s'effectue transversalement à la direction de déplacement du moyen d'actionnement, des organes de transmission mécanique sont nécessaires pour transformer le mouvement du vérin d'actionnement et obtenir un déplacement desdites pièces : ces organes de transformation de mouvement sont généralement constitués par des cames, des leviers ou des équerres basculantes articulées autour d'un axe solidaire du corps du dispositif.

Dans la pratique, la précision désirée de 5/100^{e} de mm pour le centrage est difficilement obtenue par les dispositifs actuels, à moins de réaliser le dispositif en prenant des précautions particulières pour l'usinage, ce qui renchérit son coût de fabrication.

L'invention a pour but de remédier aux inconvénients de la technique connue, en proposant un dispositif amélioré, de fabrication simple et économique permettant d'obtenir la précision recherchée ou une précision meilleure sans coût d'usinage excessif.

L'invention a pour objet un dispositif de positionnement et de centrage, notamment de pièce pour carrosserie automobile, du type comportant un corps avec un moyen d'actionnement pour actionner des moyens de centrage aptes à se déplacer entre une position rapprochée de dégagement et une position écartée de centrage, caractérisé par le fait que les moyens de centrage sont déplacés par des éléments montés à coulissement et en faisant un angle avec la direction de déplacement du moyen d'actionnement de manière à améliorer la précision et la concentricité du centrage à obtenir.

Selon d'autres caractéristiques de l'invention :
- chaque moyen de centrage est monté coulissant dans une fente de guidage,
- chaque moyen de centrage est monté coulissant par rapport à un couvercle sous un organe de protection sensiblement étanche aux impuretés, éclats, copeaux ou analogue,
- chaque élément faisant un angle avec la direction de déplacement du moyen d'actionnement est monté prisonnier par rapport à un moyen de centrage et monté à coulissement par rapport à une tête solidaire du moyen d'actionnement,
- chaque élément faisant un angle avec la direction de déplacement du moyen d'actionnement est monté prisonnier par rapport à une tête solidaire du moyen d'actionnement et monté à coulissement par rapport à un moyen de centrage,
- l'angle formé par un élément avec la direction du moyen d'actionnement est inférieur à une valeur prédéterminée voisine de cinq degrés d'angle, de manière à obtenir un autoblocage de l'élément en cas d'inefficacité ou de relâchement du moyen d'actionnement,
- le dispositif comporte des moyens résilients de blocage anti-réversibilité, de manière à maintenir le centrage obtenu en cas de relâchement ou d'inefficacité du moyen d'actionnement,
- le dispositif comporte une conformation, dans laquelle les moyens de centrage sont montés prisonniers et déplaçables, et cette conformation présente des orifices de passage desdits éléments montés à coulissement,
- ladite conformation présente un couvercle démontable et un fond comportant lesdits orifices de passage,
- les éléments montés à coulissement sont écartés radialement par une tête solidaire du moyen d'actionnement.

L'invention sera mieux comprise grâce à la description qui va suivre donnée à titre d'exemple non limitatif en référence aux dessins annexés dans lesquels :
- la figure 1 représente schématiquement un principe de fonctionnement de dispositif selon l'invention,
- la figure 2 représente schématiquement une vue de dessus d'un premier mode de réalisation de dispositif selon l'invention en position rapprochée de dégagement,
- la figure 3 représente schématiquement une vue en élévation latérale du dispositif de la figure 2,
- la figure 4 représente schématiquement une vue en coupe selon la ligne IV-IV de la figure 3,
- la figure 5 représente schématiquement une vue en coupe selon la ligne V-V de la figure 4,
- la figure 6 représente schématiquement une vue analogue à la figure 2 du dispositif selon l'invention en position écartée de centrage,
- la figure 7 représente schématiquement une vue en élévation latérale du dispositif des figures 2 et 6,
- la figure 8 représente schématiquement une vue en coupe selon la ligne VIII-VIII de la figure 7,
- la figure 9 représente schématiquement une vue de dessus d'un autre mode de réalisation de dispositif selon l'invention.

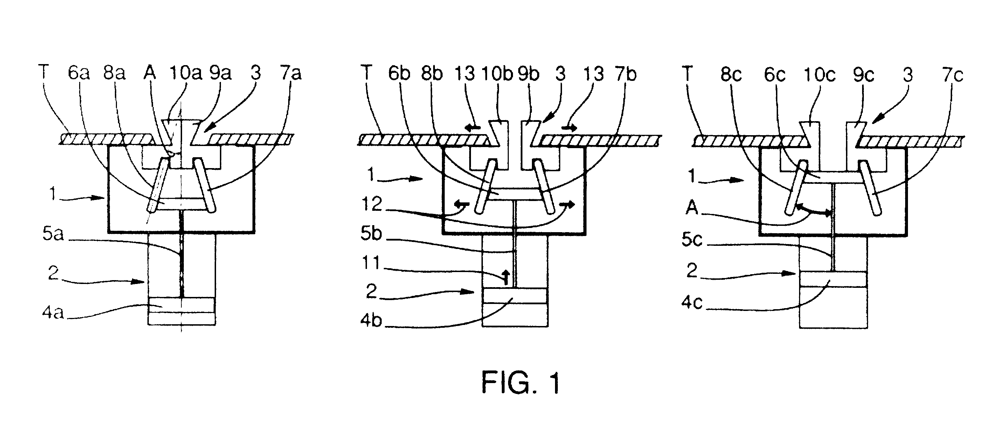

En référence aux schémas de la figure 1, un dispositif selon l'invention comporte un corps 1 portant un moyen d'actionnement 2 pour actionner des moyens de centrage 3 aptes à se déplacer entre une position rapprochée de dégagement et une position écartée de centrage.

Dans la position rapprochée de dégagement, le piston 4a du vérin 2 d'actionnement est en position basse ; la tige 5a du vérin 2 est rentrée dans le corps du vérin et la tête 6a portée par la tige 5a entraînée par le piston 4a est en position basse entre des éléments 7a, 8a en position rapprochée. Les éléments 7a, 8a sont reliés à des mors 9a, 10a qui, en raison de cette liaison, sont également en position rapprochée, dans laquelle il est possible de coiffer les mors 9a, 10a par une tôle T ou autre pièce de carrosserie automobile.

Pendant le déplacement dans le sens de la flèche 11, le piston se déplace pour arriver à une position intermédiaire 4b en entraînant la tige 5b dans le sens de la flèche 11 et en provoquant par l'action de la tête 6b un déplacement des éléments 7b, 8b dans le sens des flèches 12 ; en raison de la liaison avec les pièces 7b et 8b, les mors 9b, 10b se déplacent également dans le sens des flèches 13 pour venir au contact de l'orifice de centrage de la tôle T.

En position écartée de centrage, obtenue en fin de mouvement, les mors 9c, 10c remplissent l'orifice de centrage de la tôle T, de manière à positionner cette tôle T au cours des opérations de formage, d'emboutissage, d'estampage, de soudage, d'assemblage ou d'opérations analogues ; les éléments 7b, 8b sont maintenus en position écartée par la tête 6c en position haute située à l'extrémité de la tige 5c du vérin 2 ; la tige 5c est maintenue en position haute par le piston 4c en position haute : des moyens non représentés peuvent être prévus pour maintenir la position de centrage dans le cas d'un relâchement du vérin 2, par exemple en cas de rupture du circuit pneumatique.

Alternativement, on peut choisir l'angle A formé par les éléments 7c, 8c avec la direction du moyen d'actionnement de manière à obtenir un blocage relatif entre la tête 6c et les éléments 7c, 8c : dans le cas d'un contact métal sur métal, on peut par exemple choisir un angle A inférieur à une valeur prédéterminée voisine de 5 degrés d'angle, et on obtient un blocage du même type que celui obtenu par les cônes auto-serrants utilisés pour le montage d'outil d'usinage sur une machine-outil.

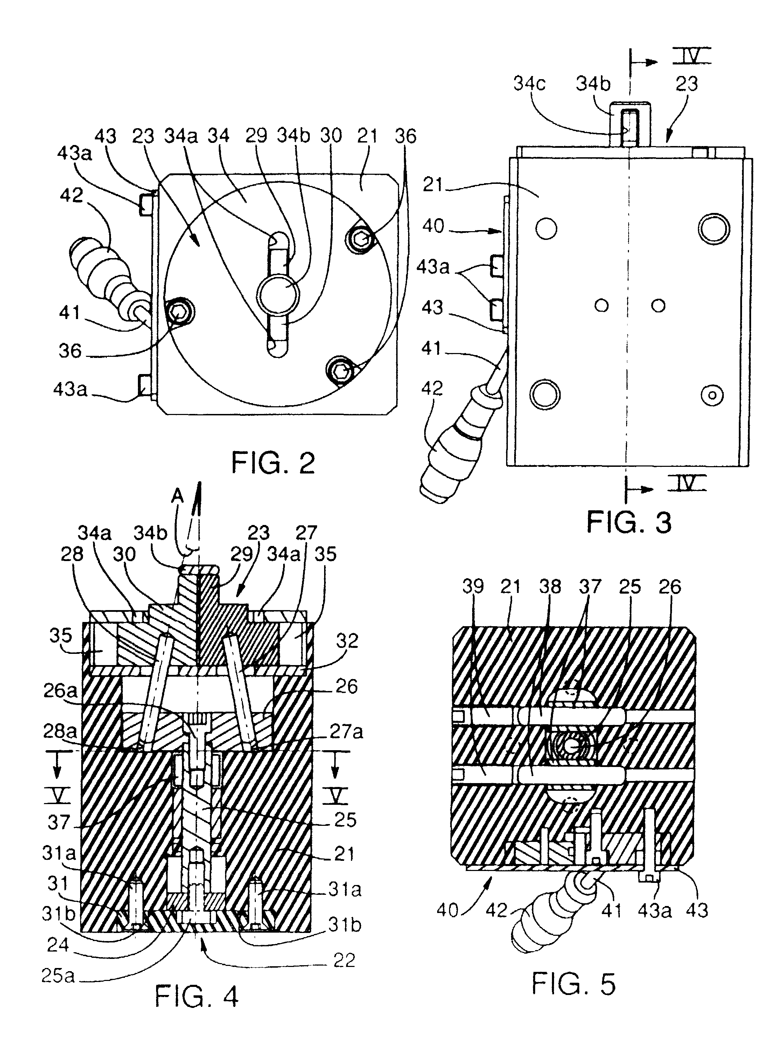

En référence aux figures 2 à 8, des éléments identiques ou fonctionnellement équivalents sont repérés par des chiffres de référence identiques.

Le dispositif selon l'invention comporte un corps 21 sensiblement parallélépipédique présentant en face inférieure un ensemble 22 formant vérin d'actionnement et en face supérieure un ensemble 23 de centrage.

Le corps 21 est usiné en face inférieure de manière à présenter un alésage dans lequel coulisse un piston 24 sur lequel est montée une tige 25 au moyen d'une vis 25a de solidarisation. La tige 25 d'actionnement porte à son extrémité supérieure une tête 26 solidarisée à la tige 25 au moyen d'une vis 26a. Des éléments 27, 28 sont montés coulissants dans deux alésages obliques 27a, 28a de la tête 26, en formant un angle avec la direction de déplacement du vérin 22, matérialisée par l'axe de la tige 25.

Les éléments 27, 28 en forme de bâtonnets sont montés prisonniers à leur extrémité supérieure dans des mors 29, 30 : ce montage dans des alésages des mors 29 et 30 supprime par conséquent tout jeu mécanique entre le mors 29 ou 30 et l'élément 27 ou 28 correspondant.

La face inférieure du vérin 22 est constituée par une plaque de fond 31 montée solidaire du corps du vérin par des vis 31a avec interposition d'un joint d'étanchéité 31b approprié.

Les mors 29 et 30 sont montés prisonniers et déplaçables dans une conformation en forme de boîte présentant un fond 32 percé d'orifices ou de lumières 33 pour le passage des éléments 27 et 28 ; un couvercle 34 et un bord 35 de liaison cylindrique ; l'ensemble comportant le fond 32, le couvercle 34 et la pièce annulaire 35 formant entretoise étant fixé par des vis 36 traversantes au corps 21 du dispositif.

L'ensemble des pièces 32 à 35 forme ainsi un module emprisonnant les mors 29 et 30 dont sont solidaires les éléments 27 et 28 en forme de bâtonnet cylindrique. Ces bâtonnets cylindriques 27 et 28 dépassent par les orifices 33 du module précité.

Les mors 29 et 30 sont montés coulissants dans une fente de guidage 34a du couvercle 34. Dans la position rapprochée de dégagement représentée aux figures 2 à 5, les mors 29 et 30 sont escamotés sous un capuchon 34b de protection en relief par rapport au disque principal du couvercle 34 dans lequel sont pratiquées les fentes 34a. Le capuchon 34b présente également deux fentes verticales 34c pour permettre le coulissement des mors 29 et 30. Cette disposition permet de rendre l'intérieur du dispositif étanche aux impuretés, éclats, copeaux ou autres salissures susceptibles de passer entre les mors 29 et 30 au cours de leurs mouvements.

On détermine la dimension du capuchon 34b et des fentes 34c en fonction de la course de déplacement des mors 29 et 30 pour assurer constamment une étanchéité aux impuretés, éclats, copeaux ou autres salissures susceptibles d'être projetées sur le dispositif. L'homme du métier adaptera en conséquence le diamètre du capuchon 34b et les dimensions des fentes 34c en proportion de la taille des mors 29 et 30 et de leur conformation.

Dans le cas où l'angle A formé entre la direction de déplacement du moyen d'actionnement et les éléments 27 et 28 est inférieur à 5 degrés, on obtient généralement un autoblocage du dispositif en position de centrage même en cas de relâchement de la pression pneumatique.

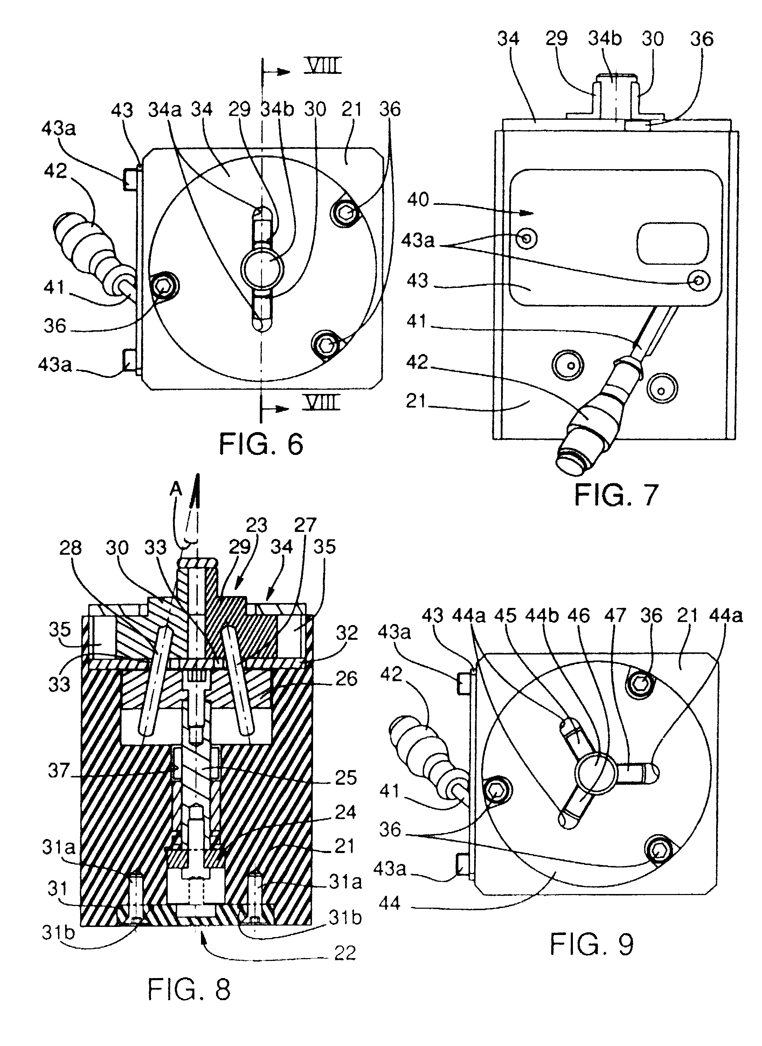

Toutefois, on peut également prévoir de maintenir la tige 25 en position en utilisant des moyens résilients de blocage antiréversibilité. De manière avantageuse, ces moyens de blocage antiréversibilité sont constitués par des cylindres 37 en polyuréthane ou matériau analogue montés sur des axes 38 emprisonnés dans des logements au moyen de vis 39. Ainsi, lorsque le dispositif est en position écartée de centrage représentée aux figures 6 à 8, la friction des patins 37 sur l'axe 25 empêche le retour du dispositif en position rapprochée de dégagement, même en cas de chute de pression pneumatique.

De manière connue, le dispositif comporte avantageusement des moyens de détection de position 40, qui peuvent être prévus pour transmettre par un câble 41 et un connecteur 42 des informations relatives à la position du dispositif. De manière avantageuse, les moyens de détection 40 sont constitués sous forme d'un module de détection protégé par une plaque 43 fixée par des vis 43a au corps 21 du dispositif.

Des organes indicateurs de position tels que des diodes électroluminescentes peuvent être prévus pour indiquer directement cette position à l'opérateur.

L'invention décrite en référence à un mode de réalisation particulier n'y est nullement limitée mais couvre au contraire toute modification de forme et toute variante de réalisation dans le cadre et l'esprit de l'invcntion, par exemple en augmentant le nombre de mors de centrage et en modifiant de manière correspondante les formes du couvercle ainsi que représenté à la figure 9.

Sur cette figure, un couvercle 44 avec un capuchon de protection 44b et trois fentes de guidage 44a recouvre trois mors 45, 46, 47 de manière analogue à ce qui vient d'être décrit en référence aux figures 1 à 8.

Egalement, les éléments 27, 28 de commande en forme de bâtonnets cylindriques pourraient être montés prisonniers dans une tête de commande 26 et coulissants dans des mors 29, 30 ou 45 à 47 sans sortir du cadre de la présente invention.

## Revendications

1. Dispositif de positionnement et de centrage, notamment de pièce pour carrosserie automobile, du type comportant un corps (1, 21) avec un moyen d'actionnement (2, 22) pour actionner des moyens de centrage (9, 10, 29, 30) aptes à se déplacer entre une position rapprochée de dégagement et une position écartée de centrage, caractérisé par le fait que les moyens de centrage (9, 10, 29, 30) sont déplacés par des éléments montés à coulissement (7a-7c, 8a-8c, 27, 28) et en faisant un angle (A) avec la direction de déplacement du moyen d'actionnement (2, 22) de manière à améliorer la précision et la concentricité du centrage à obtenir.

2. Dispositif selon la revendication 1, caractérisé par le fait que chaque moyen de centrage (9, 10, 29, 30) est monté coulissant dans une fente (34a, 34c, 44a) de guidage.

3. Dispositif selon la revendication 1 ou la revendication 2, caractérisé par le fait que chaque moyen de centrage (9, 10, 29, 30) est monté coulissant par rapport à un couvercle (34, 44) sous un organe de protection (34b, 44b) sensiblement étanche aux impuretés, éclats, copeaux ou analogue.

4. Dispositif selon la revendication 1, caractérisé par le fait que chaque élément (7, 8, 27, 28) faisant un angle (A) avec la direction de déplacement du moyen d'actionnement (2, 22) est monté prisonnier par rapport à un moyen de centrage (9, 10, 29, 30) et monté à coulissement par rapport à une tête (6a-6c, 26) solidaire du moyen d'actionnement (2, 22).

5. Dispositif selon la revendication 1, caractérisé par le fait que chaque élément (7, 8, 27, 28) faisant un angle (A) avec la direction de déplacement du moyen d'actionnement est monté prisonnier par rapport à une tête solidaire du moyen d'actionnement et monté à coulissement par rapport à un moyen de centrage.

6. Dispositif selon la revendication 4 ou la revendication 5, caractérisé par le fait que l'angle (A) formé par un élément (7, 8, 27, 28) avec la direction du moyen d'actionnement (2, 22) est inférieur à une valeur prédéterminée voisine de cinq degrés d'angle, de manière à obtenir un autoblocage de l'élément en cas d'inefficacité ou de relâchement du moyen d'actionnement (2, 22).

7. Dispositif selon la revendication 4 ou la revendication 5, caractérisé par le fait que le dispositif comporte des moyens résilients (37) de blocage antiréversibilité, de manière à maintenir le centrage obtenu en cas de relâchement ou d'inefficacité du moyen d'actionnement (2, 22).

8. Dispositif selon l'une quelconque des revendications précédentes, caractérisé par le fait que le dispositif comporte une conformation (32-35), dans laquelle les moyens de centrage (29, 30, 45-47) sont montés prisonniers et déplaçables, et en ce que cette conformation (32-35) présente des orifices (33) desdits éléments montés à coulissement.

9. Disposition selon la revendication 8, caractérisé par le fait que ladite conformation (32-35) présente un couvercle démontable (34) et un fond (32) comportant lesdits orifices (33) de passage.

10. Dispositif selon l'une quelconque des revendications précédentes, caractérisé par le fait que les éléments (7a-7c, 8a-8c, 27, 28) montés à coulissement sont écartés radialement par une tête (6, 26) solidaire du moyen d'actionnement (2, 22).
